# EUROPÄISCHE PATENTSCHRIFT

(11) **EP 2 867 315 B1**
(45) Veröffentlichungstag und Bekanntmachung des Hinweises auf die Patenterteilung: **13.07.2016**
(21) Anmeldenummer: 13721268.4
(22) Anmeldetag: 10.05.2013
(51) Int. Cl.: C09D 17/00, C09B 67/00

(54) **FETTSÄUREKONDENSATIONSPRODUKTE ALS DISPERGIERMITTEL IN PIGMENTPRÄPARATIONEN**
FATTY ACID CONDENSATION PRODUCTS AS DISPERSING AGENT IN PIGMENT PREPARATIONS
PRODUITS DE CONDENSATION D'ACIDES GRAS COMME AGENTS DISPERSANTS DANS DES PRÉPARATIONS DE PIGMENTS

(30) Priorität: 29.06.2012 DE 102012013046
(43) Veröffentlichungstag der Anmeldung: 06.05.2015
(73) Patentinhaber: CLARIANT INTERNATIONAL LTD, 4132 Muttenz (CH)
(72) Erfinder: AHRENS, Hendrik, 65830 Kriftel (DE)
(74) Vertreter: Mikulecky, Klaus
(86) Internationale Anmeldenummer: PCT/EP2013/001398
(87) Internationale Veröffentlichungsnummer: WO 2014/000842

(56) Entgegenhaltungen:
- EP-A1- 0 659 529
- WO-A1-97/21775
- DE-A1- 3 022 613
- DE-A1-102004 034 646
- US-A- 4 156 616
- "Cosmetic compositions comprising Polyquaternium-74 copolymer", IP.COM JOURNAL, IP.COM INC., WEST HENRIETTA, NY, US, 28. November 2007 (2007-11-28), XP013122962, ISSN: 1533-0001

## Beschreibung

Gegenstand der vorliegenden Erfindung sind wässrige Pigmentdispersionen, die Fettsäurekondensationsprodukte als Dispergiermittel enthalten, sowie ihre Verwendung zum Färben von makromolekularen Materialien aller Art, wie beispielsweise Fasermaterialien, Papiermassefärbung, Beschichtungsstoffe, Lacke, Farben und ihre Verwendung zum Bedrucken von zweidimensionalen Flächengebilden wie beispielsweise Papier, Kartonagen, Kunststoff, Textilien und Leder.

Für das Einfärben von makromolekularen Materialien, insbesondere von Farben und Lacken werden wässrige Pigmentpräparationen mit organischen oder anorganischen Pigmenten hergestellt. Diese Pigmentpräparationen kommen als Abtönpasten in Baumärkten und Malerfachgeschäften zum Einsatz und werden mit Hilfe von Dosier- und Abtönanlagen wässrigen und lösemittelhaltigen Farben und Lacken zugesetzt, um Kundenwünschen entsprechende Farbtöne einzustellen. DE-19654829 beschreibt eine Dosier- und Abtönanlagen zur Herstellung von gefärbten Medien. US-5042699, US-5911342, US-5950874 und US-6269978 beschreiben Dosieranlagen zum Einfärben von Farben mit Hilfe von volumetrischen Dosiervorrichtungen. Üblicherweise werden Abtönpasten in Baumärkten und Malerfachgeschäften zu Farben in 5 bis 10 Liter Gebinden dosiert und in Rüttelmaschinen vermischt. Zur genauen Einstellung eines bestimmten Farbtons, werden die Abtönpasten volumetrisch dosiert. Die kleinste dosierbare Einheit sind 0,1 ml. Bei besonders farbstarken Pigmenten darf daher die Pigmentkonzentration nicht zu hoch liegen, um bei Überdosierung noch keine wahrnehmbare Farbtonverschiebung festzustellen. Üblicherweise enthalten Abtönpasten Pigmentkonzentrationen in einem breiten Konzentrationsbereich von 1 bis 75 Massen-%.

WO 2011151277 beschreibt Abtönpasten mit geringem VOC-Gehalt, die neben nichtflüchtigen organischen Lösemitteln und Stabilisatoren, mindestens ein farbiges Pigment und gegebenenfalls auch Rheologieadditive und Füllstoffe enthalten können, wobei die Pigmentkonzentration in einem Bereich von 4 bis 77 Massen-% liegt.

DE-A-26 38 946 lehrt Pigmentdispersionen, die zum Pigmentieren sowohl hydrophiler als auch hydrophober Medien geeignet sind. Außer den Pigmenten enthalten sie Alkylenoxidaddukte an langkettigen, vorzugsweise primären Aminen und anionische Tenside mit mindestens einem aliphatischen Rest, der 3 bis 40, vorzugsweise 6 bis 22 Kohlenstoffatome enthält. Die anionischen Tenside können als Salze oder auch in Form der Säuren zugesetzt werden. Geeignet sind vor allem einbasische anionische Tenside. Neben den genannten Bestandteilen können die Pigmentdispersionen auch nichtionogene Tenside enthalten, sowie Konservierungsmittel, Wasser und/oder das Eintrocknen verhindernde Substanzen.

EP-A-0 866 838 lehrt eine Pigmentdispersion die vollständig frei ist von organischen Lösungsmitteln und enthält
a) 1,0 bis 65 Gew.-5 eines farbgebenden Pigments,
b) 4 bis 20 Gew.-% eines wasserlöslichen oder wasserdispergierbaren Amidoalkoxylats der Formel 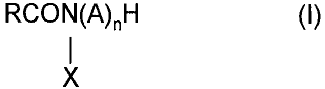 worin
   - R: eine aliphatische Kohlenwasserstoffgruppe mit 7 bis 22 Kohlenstoffatomen, vorzugsweise 9 bis 18 Kohlenstoffatomen ist,
   - A: unabhängig voneinander eine Akyenoxygruppe mit 2 bis 3 Kohlenstoffatomen ist,
   - X: Wasserstoff oder die Gruppe (A)nH ist, worin A die vorstehend aufgeführte Bedeutung aufweist,
   - n: eine Zahl von 1 bis 15 ist, wobei die Summe aller n 3 bis 20 ist,
c) 15 bis 86 Gew.-% Wasser,
d) 0 bis 20 Gew.-% eines Füllstoffs,
e) 0 bis 5 Gew.-% eines anionischen und/oder amphoteren Tensids,
f) 0 bis 2 Gew.-% eines wasserrückhaltenden Polymers.

DE-A-102 33 081 lehrt die Verwendung von festen Pigmentzubereitungen, die als wesentliche Bestandteile
(A) 60 bis 90 Gew.-% mindestens eines Pigments und
(B) 10 bis 40 Gew.-% mindestens eines oberflächenaktiven Additivs aus der Gruppe der nichtionischen Polyether und ihrer sauren Phosphorsäure-, Phosphonsäure-, Schwefelsäure- und/oder Sulfonsäureester und deren Salzen
enthalten, zur Einfärbung von Kunststoffen.

DE-A-198 22 603 lehrt wässrige Pigmentpasten enthaltend hydrophob modifizierte Polyasparaginsäurederivate als Dispergiermittel. Die Erfindung betrifft insbesondere die Verwendung von hydrophob modifizierten Polyasparaginsäurederivaten als Dispergiermittel zur Herstellung wässriger Pigmentpasten.

US-2010113685 beschreibt Universalpasten für das Einfärben von wässrigen und lösemittelhaltigen Farben und Lacken, die mit Hilfe von nichtionischen Tenside stabilisiert wurden.

DE 10 2004 034 646 A1 lehrt eine Beschichtungsmittel-Formulierung, enthaltend eine Mischung, enthaltend als Komponente a1 wenigstens ein Tensid und als Komponente a2 wenigstens eine Verbindung entsprechend der allgemeinen Formel (I)

R¹-O-(CH₂-CHR₂-O)ₙ(CH₂-CH₂-O)ₘ-R³ (I)

in der
R¹ optional substituiertes Phenyl, C₂-C₁₄-Alkyl,
R² C₁-C₈-Alkyl,
R³ Wasserstoff, C₁-C₆-Alkyl, Benzoyl, Acetyl, Acryl, Metacryl,
n mittelerer Wert von 0 bis 10,
m mittlerer Wert von 1 bis 10, wobei n + m ≦ 10, m > n ist,
bedeuten,
wobei die gegebenenfalls verschiedenen Alkylenoxid-Struktureinheiten statistisch verteilt oder blockweise angeordnet sein können, 1 - 95 Gew.-% schichtbildende Bindemittel und Harze, 0 - 80 Gew.-% Füllstoffe, 0 - 40 Gew.-% Pigmente,
0 - 20 Gew.-% Additive und 0 - 90 Gew.-% organische Lösungsmittel und/oder Wasser, wobei die Summe der Gewichtsprozente 100 Gew.-% ergibt, sowie die Verwendung der erfindungsgemäßen Mischung zur Erniedrigung der Grenzflächenspannung in einem Beschichtungsstoff durch Zugabe zu dem Beschichtungsstoff.

EP 659 529 lehrt ein Außentrennmittel, enthaltend
I Helle Pigmente:
   10 bis 60 Gew.-% amorphes Kieselgelpulver
   0,1 bis 1,5 Gew.-% pyrogene Kieselsäure
   0,2 bis 2,0 Gew.-% Polypropylenwachs
II Farbpigmente:
   1 bis 5 Gew.-% Farbruß
   1 bis 8 Gew.-% Eisenoxid schwarz
III Bindemittel
   0,3 bis 3 Gew.-% Fettsäuremethyltaurid, Na-Salz oder
   0,5 bis 6 Gew.-% wässrige Polyethylendispersion
IV Tenside
   0 bis 0,4 Gew.-% nichtionisches Tensid
V Trägerflüssigkeit
   ca. 60 bis 77 Gew.-% Wasser mit Zusätzen.

DE 2638946 lehrt Pigmentdispersionen, gekennzeichnet durch einen Gehalt an
a) Pigmenten
b) Alkylenoxidaddukten an langkettige Amine und
c) anionischen Tensiden mit mindestens einem aliphatischen Rest mit 3 bis 40 Kohlenstoffatomen.

DE 3022613 lehrt Pigmentdispersionen, gekennzeichnet durch einen Gehalt an
a) Pigmenten
b) Carbonsäuren der allgemeinen Formel (1) 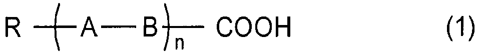 in der
   R einen aliphatischen Rest mit 6 bis 30 C-Atomen,
   A eine bivalente Verknüpfungsgruppe,
   B eine Alkylen- oder Alkenylengruppe mit 1 bis 6 C-Atomen und
   n 0, 1 oder 2 bedeuten,
c) Imidazolinen der allgemeinen Formel (2) 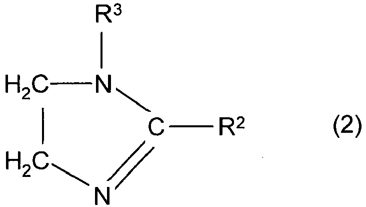 in der
   R² einen aliphatischen Rest mit 6 bis 30 C-Atomen und
   R³ Wsaserstoff oder einen Alkylrest mit 1 bis 4 C-Atomen bedeuten und
d) Polyolen und/oder Carbonsäureamiden.

Obwohl nach dem Stand der Technik eine Vielzahl von Verbindungen als geeignete Netz- und Dispergiermittel vorgeschlagen werden, fehlt es in der Praxis immer wieder an effektiven Dispergiermitteln für Pigmentdispersionen, die den Anforderungen an Sedimentationsstabilität, rheologisches Verhalten, Farbausbeute der Pigmente und an ein geringes human- und ökotoxikologisches Verhalten genügen.

Darüber hinaus schränken Vergaberichtlinien für Umweltsiegel die Verwendung bekannter Netz- und Dispergierhilfsmittel ein, so dass der Fachmann immer wieder auf der Suche nach neuen Dispergiermitteln und Kombinationen ist, um flüssige, stabile, wässrige Pigmentpräparationen herzustellen.

Der vorliegenden Erfindung lag die Aufgabe zugrunde, stabile und fließfähige wässrige Pigmentpräparationen herzustellen, die über einen längeren Zeitraum keine Sedimentation der verwendeten Pigmente aufzeigen, und mit denen sich wässrige und lösemittelhaltige Farben, Lacke und Lasuren gleichermaßen einfärben lassen. Beim Abtönen von wässrigen Lacken und Farben, insbesondere Dispersionsfarben, Silikatdispersionenfarben und wässrigen Silikonharzfarben sollten die erfindungsgemäßen Pigmentpräparationen keine Rubout-Probleme zeigen.

Weiterhin sollen die wässrigen Pigmentpräparationen auch mit lösemittelhaltigen Lacken kompatible sein, sich homogen durch Mischen, Rühren oder Schütteln im Lack verteilen lassen und bei Streiche oder Rolle auf Oberflächen ein ruhiges, gleichmäßiges Farbbild ergeben. Auch für die Kompatibilität der wässrigen Pigmentpräparationen dient der Rubout-Test, der in der in der Schrift US-3840383 beschriebenen Weise durchgeführt wird.

Eine weitere Aufgabe der Erfindung war es, wässrige Pigmentpräparationen mit geringem humantoxikologischen Potenzial und geringer Umweltgefährdung bereit zu stellen. Wünschenswert ist es, wässrige Pigmentpräparationen herzustellen, welche nach der Europäischen Verordnung 2008-1272 EG nicht kennzeichnungspflichtig sind. Leicht flüchtige organische Verbindungen mit einem Siedepunkt von < 250 °C (VOC Gehalte) sollen den wässrigen Pigmentpräparationen nicht explizit zugesetzt werden und nur in geringen Mengen in Form von nicht umgesetzten Syntheserohstoffe oder als Nebenreaktionsprodukten enthalten sein.

Überraschenderweise wurde gefunden, dass Pigmentpräparationen, die Fettsäurekondensationsprodukte der Formel I in Kombination mit Fettsäureethanolamidethoxylat enthalten, diese Aufgabe erfüllen.

Gegenstand der Erfindung sind daher wässrige Pigmentpräparationen, enthaltend
(A) 1,0 bis 75,0 Gew.-% mindestens eines organischen oder anorganischen Weiß- oder Buntpigmentes oder eine Mischung verschiedener organischer und anorganischer Weiß- oder Buntpigmente,
(B) 0,01 bis 8,0 Gew.-% mindestens eines Fettsäurekondensationsprodukts der Formel (I), 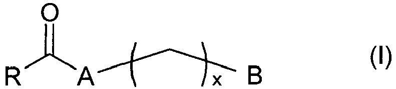 worin
   - R: ein linearer oder verzweigter Alkyl- oder Alkenylrest mit 7 bis 21 Kohlenstoffatomen,
   - A: ein Sauerstoffatom, eine -NH-Gruppe, eine -N(CH₃)-Gruppe oder eine Gruppe der Formel (II),

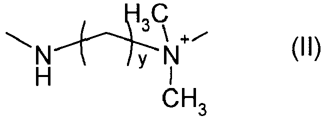

   - B: eine Carbonsäuregruppe der Formel -COOH, eine Sulfonsäuregruppe der Formel -SO₃H, deren Natrium-, Kalium-, Ammonium- oder Monoalkanolammonium- oder Trialkanolammoniumsalze und deren deprotonierte Form -COO⁻ und -SO₃⁻ und
   - x und y: unabhängig voneinander eine ganze Zahl von 1 bis 6 darstellen.
(C) 0,01 bis 12,0 Gew.-% eines Fettsäureethanolamidethoxylats der Formel (XI), und 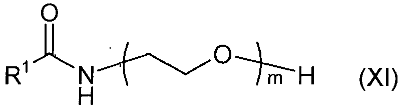 worin m für eine ganze Zahl von 3 bis 50, und R¹ für C₇- bis C₂₁-Alkyl oder -Alkenyl stehen und
(G) Wasser.

Die erfindungsgemäße Pigmentpräparation kann darüber hinaus einen oder mehrere der Bestandteile
(D) 0 - 8,0 % Tonmineralverdicker auf Basis von natürlichen oder alkalisch aktivierten Montmorrilonit-Schichtsilikatmineralien,
(E) 0 - 20,0 % anorganische Füllstoffe und
(F) gegebenenfalls 0 bis 30 Gew.-% weitere, für die Herstellung von wässrigen Pigmentpräparationen übliche Hilfsmittel wie zusätzliche Netzmittel, Feuchthaltemittel, Lösemittel, Entschäumer, Rheologieadditive, Konservierungsmittel, Puffersubstanzen und pH-Regulatoren enthalten.

Der Begriff "Alkanol" in Mono- und Trialkanolammonium steht vorzugsweise für C₂- bis C₆-Alkanole.

Die erfindungsgemäßen Pigmentpräparationen sind scherbeständig, eintrockenbeständig, lagerbeständig, schäumen bei der Applikation nicht oder nur wenig und verfügen über eine hervorragende Rheologie.

Die Komponente (A) der erfindungsgemäßen Pigmentpräparationen ist vorzugsweise ein feinteiliges, organisches oder anorganisches Weiß- oder Buntpigment oder ein Gemisch verschiedener Pigmente.

Als beispielhafte Auswahl besonders bevorzugter organischer Pigmente sind dabei Rußpigmente, wie z. B. Gas- oder Furnaceruße; Monoazo- und Disazopigmente, insbesondere die Color Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 254, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61 zu nennen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Color Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Die Komponente (B) der erfindungsgemäßen Pigmentpräparationen ist ein Fettsäurekondensationsprodukt, das auf natürlichen oder synthetischen Fettsäuren basiert. Die als Rohstoff verwendeten Fettsäuren können gesättigt und ungesättigt vorliegen. Geeignete Fettsäuren sind Caprinsäure, Laurinsäure, Myristinsäure, Palmitinsäuren, Margarinsäure, Stearinsäure, Arachinsäure, Behensäure, Palimtoelinsäure, Ölsäure und natürlich vorkommende Mischungen wie Palmkernölfettsäure, Rapsölfettsäure, Sonnenblumenölfettsäure, Sojaölfettsäure oder Harzsäuren wie Tallölfettsäure. Geeignete Fettsäurekondensationsprodukte sind
- Fettsäureisethioniate, beispielsweise Kokosfettsäureisethionat als Natrium-, Kalium- oder Ammoniumsalze (Formel III), 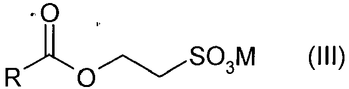
- Fettsäuretauride als Natrium-, Kalium- oder Ammoniumsalze,
- Fettsäuremethyltauride wie beispielsweise Kokosfettsäuremethyltaurid und Ölsäuremethyltaurid als Natrium-, Kalium- und Ammoniumsalze (Formel IV), 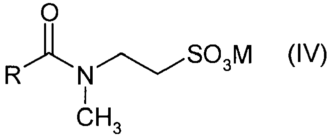
- Fettsäureglycinate, wie beispielsweise Cocoylglycinat als Natrium-, Kalium- und Ammoniumsalze (Formel V), 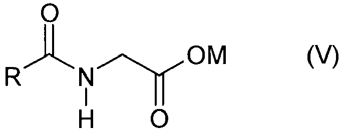
- Fettsäureamidocarbonsäure in saurer Form und als Natrium-, Kalium-, Ammonium-, Monoalkanolammonium und Trialkanolammoniumsalz (Formel VI), wie beispielsweise die ε-Isononansäureamidocapronsäure und deren Triethanolammoniumsalz, 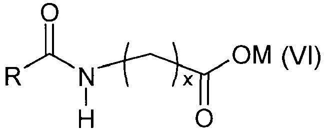
- Sarkosine wie Oleylsarkosin und Sarkoside, wie beispielsweise Lauroylsarkosid als Natrium-, Kalium und Ammoniumsalze (Formel VII) und 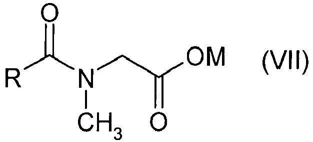
- Betaine, wie beispielsweise Kokosfettsäureamidopropylbetain (Formel VIII).

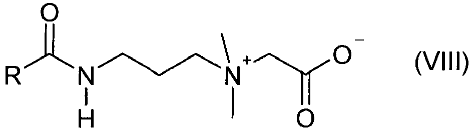

In den Formeln (III) bis (VII) steht M für Natrium, Kalium, Ammonium, Monoalkanolammonium oder Trialkanolammonium.

Die Komponente (C) der erfindungsgemäßen Pigmentpräparationen ist ein Fettsäureethanolamid der Formel (XI)

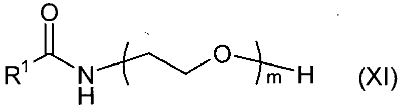

Ethoxylierte Fettsäureethanolamide werden vorzugsweise durch Umsetzen von Fettsäuren mit Ethanolamin zum Fettsäureethanolamid und anschließender Anlagerung von Ethylenoxid mittels alkalischer Katalysatoren wie Natrium- oder Kaliummethylat hergestellt. R¹ ist vorzugsweise eine Alkyl- oder Alkenylgruppe mit 11 bis 19 Kohlenstoffatomen, wobei auch mehr als eine Doppelbindung enthalten sein kann. m ist vorzugsweise mindestens gleich 2, insbesondere mindestens gleich 3. Ausgehend vom Fettsäureethanolamid wird Ethylenoxid vorzugsweise an die endständige Hydroxylgruppe addiert. Die Addition von Ethylenoxid an den Stickstoff der Säureamidgruppe erfolgt untergeordnet in einer Nebenreaktion, so dass am Stickstoff untergeordnet auch 2 Polyethylenglykoletherreste gebunden sind. Geeignete Fettsäuren für die Herstellung der Fettsäureethanolamide sind Caprinsäure, Laurinsäure, Myristinsäure, Palmitinsäuren, Margarinsäure, Stearinsäure, Arachinsäure, Behensäure, Palimtoelinsäure, Ölsäure und natürlich vorkommende Mischungen wie Palmkernölfettsäure, Rapsölfettsäure, Sonnenblumenölfettsäure, Sojaölfettsäure oder Harzsäuren wie Tallölfettsäure. Die als Rohstoff verwendeten Fettsäuren können gesättigt und ungesättigt vorliegen.

Die Komponente (D) ist ein Tonmineralverdicker auf Basis von natürlichen oder alkalisch aktivierten Montmorrilonit-Schichtsilikatmineralien. Montmorrilonit ist der wesentliche Bestandteil von Bentonit und besitzt ein hohes Ionenaustauschvermögen. Bei Zugabe von Wasser dehnt sich das Mineral um ein vielfaches der Ursprungsgröße aus, wodurch die sich die Viskosität der wässrigen Dispersion erhöht. Montmorrilonit als Tonmineralverdicker kann der erfindungsgemäßen Pigmentpräparation zugesetzt werden, um das Absetzen von organischen und anorganischen Pigmenten und Füllstoffe und die Synerese, das heißt die Bildung einer zweiten Phase mit unterschiedlicher Zusammensetzung zu verlangsamen oder zu verhindern.

Die Komponente (E) ist ein anorganischer Füllstoff, der den erfindungsgemäßen Pigmentpräparationen zugesetzt werden kann, um die Dichte zu erhöhen und das Fließverhalten zu verändern. Bei volumetrischer Dosierung und geringer Pigmentkonzentration oder leichten organischen Pigmenten kann es möglich sein, dass sich die Pigmentpräparation in den Dosiergeräten nur schlecht dosieren lässt, weil die Gravitationskraft nicht ausreicht, um die flüssige Pigmentpräparation in das Farbengebinde zu entleeren. In anderen Fällen ist die Viskosität der Pigmentpräparationen bei niedrigen Pigmentkonzentrationen zu niedrig, was zu einem Nachtropfen führt. In beiden Fällen können den erfindungsgemäßen Pigmentpräparationen farblose anorganische Füllstoffe zugesetzt werden, um die Dichte der Pigmentpräparation zu erhöhen und das Fließverhalten zu verbessern. Geeignete Füllstoffe sind Calciumcarbonate wie natürlich vorkommende Kreide und gefälltes Calciumcarbonat, Dolomit, natürliches Siliciumdioxid (Quarzmehl), pyrrogene und gefällte Kieselsäuren, Kieselgur, Aluminiumoxide, Aluminiumhydroxide, Talkum, Kaolin, Glimmer (Kalium-Aluminium-Silikat-Hydrat), Bariumsulfate wie natürlich vorkommendes Schwerspate und gefälltes Blanc Fix.

Die Komponenten (F) sind weitere für die Herstellung von wässrigen Pigmentpräparationen übliche Hilfsmittel wie zusätzliche Netzmittel, Feuchthaltemittel, Lösemittel, Entschäumer, Rheologieadditive, Konservierungsmittel, Puffersubstanzen und pH-Regulatoren.

Zusätzliche Netzmittel können Netzmittel auf Basis von Polysiloxanethern sein, beispielsweise ein Methoxypolyethoxypropyltrisiloxan, Alkindiolethoxylate und Fluortenside.

Geeignete Feuchthaltemittel und Lösemittel sind vorzugsweise Glykolether, worunter hier Verbindungen mit Ethoxy- und/oder Propoxygruppen verstanden werden, welche mittlere Molmassen zwischen 200 und 20.000 g/mol aufweisen, insbesondere Polyethylenglykolether oder Polypropylenglykolether mit einer mittleren Molmasse zwischen 200 und 20.000 g/mol, Mono-, Di- oder Triethylenglykol, Mono-, Di- oder Tripropylenglykol, Methy-, Ethyl- Propyl-, Butyl- oder höherwertige Alkylpolyalkylenglykolether mit 1, 2, 3 oder mehreren Ethylenglykol- oder Propylenglykoleinheiten wie beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether, Glycerinethoxylate mit einem Molekulargewicht von 200 bis 20.000 g/mol, Pentaerythritolalkoxylate mit einem Molekulargewicht von 200 bis 20.000 g/mol, oder weitere Ethoxylierungs- und Alkoxylierungsprodukte und statistische oder Blockcopolymere die durch Addition von Ethylenoxid und/oder Propylenoxide an ein- und höherwertige Alkohole hergestellt wurden, mit einem Molekulargewicht von 200 bis 20.000 g/mol.

Angaben zu Molekulargewichten von Polymeren beziehen sich stets auf deren zahlenmittleres Molekulargewicht, sofern im Einzelfall nicht anders angegeben. Molekulargewichte sind per GPC gegen Polyethylenglykol als Standard zu bestimmen.

Weitere geeignete Hilfsstoffe der erfindungsgemäßen wässrigen Pigmentpräparationen sind vorzugsweise wasserlösliche organische oder hydrotrope Substanzen, die gegebenenfalls auch als Lösungsmittel dienen. Besonders geeignet sind beispielsweise Formamid, Harnstoff, Tetramethylharnstoff, ε-Caprolactam, Glycerin, Diglycerin, Polyglycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat, Natrium-Butylmonoglykolsulfat.

Geeignete Entschäumer sind vorzugsweise Mineralölentschäumer und deren Emulsionen, Siliconölentschäumer und Siliconölemulsionen, Polyalkylenglykole, Polyalkylenglykolfettsäureester, Fettsäuren, höherwertige Alkohole, Phosphorsäureester, hydrophob modifizierte Silika, Aluminiumtristearat, Polyethylenwachse und Amidwachse.

Geeignete weitere Rheologieadditive als Mittel zur Regulierung der Viskosität sind z. B. Stärke- und Cellulosederivate und hydrophobmodifizierte ethoxylierte Urethane (HEUR)-Verdicker, alkaliquellbare Acrylatverdicker, hydrophob modifizierte Acrylatverdicker, Polymere der Acrylamidomethylpropansulfonsäure oder pyrogene Kieselsäure.

Topfkonservierer werden zur Stabilisierung der wässrigen Pigmentpräparationen und zur Verhinderung der unkontrollierten Vermehrung von Bakterien, Algen und Pilzen zugesetzt. Geeignete Biozide sind Formaldehyd, formaldehydabspaltende Komponenten, Methylisothiazolinon, Chlormethylisothiazolinon, Benzisothiazolinon, Bronopol, Dibromodicyanonbutan und silberchloridbeschichtetes Titandioxid.

Als Puffersubstanzen und pH-Regulatoren kommen vorzugsweise organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisopropylamin, 2-Amino-2-methyl-1-propanol oder Dimethylaminomethylpropanol. Bevorzugte anorganische Basen sind Natrium-, Kalium-, Lithiumhydroxid oder Ammoniak.
Zur Herstellung der erfindungsgemäßen, wässrigen Pigmentpräparationen benutztes Wasser, Komponente (G), wird vorzugsweise in Form von destilliertem oder entsalztem Wasser eingesetzt. Auch Trinkwasser (Leitungswasser) und/oder Wasser natürlichen Ursprungs kann eingesetzt werden. Wasser ist in der erfindungsgemäßen wässrigen Pigmentpräparation vorzugsweise zu 10 bis 75 Gew.-%, insbesondere ad 100 Gew.-% enthalten.
Die erfindungsgemäßen wässrigen Pigmentpräparationen weisen vorzugsweise eine Viskosität von 10 bis 10.000 mPas, bevorzugt 30 bis 5.000 mPas und besonders bevorzugt 50 bis 3.000 mPas auf, gemessen mit einem Kegel-Platte-Viskosimeter bei einer Scherrate von 1/60 sec⁻¹, z. B. einem Haake Viscometer 550 gemessen.
Die erfindungsgemäßen, wässrigen Pigmentpräparationen sind in jedem Verhältnis mit Wasser mischbar, wobei sich auch mehrere unterschiedliche Präparationen mit Wasser mischen lassen. Sie zeichnen sich gegenüber herkömmlichen Pigmentpräparationen durch eine hervorragende Lagerstabilität und gute rheologische Eigenschaften aus.

Offenbart ist ebenfalls ein Verfahren zur Herstellung der erfindungsgemäßen Pigmentpräparationen, indem man die Komponente (A) in Form von Pulver oder Granulat in Gegenwart von Wasser (G) sowie der Komponenten (B), (C) und gegebenenfalls (D), (E) und (F) in an sich üblicher Weise dispergiert, anschließend gegebenenfalls weiteres Wasser (G) zumischt und die erhaltende wässrige Pigmentdispersion mit Wasser auf die gewünschte Konzentration einstellt. Vorzugsweise werden die Komponenten (B), (C), (G) und gegebenenfalls (D), (E) und (F) vermischt und homogenisiert, dann die Komponente (A) in die vorgelegte Mischung eingerührt, wobei das Pigment angeteigt und vordispergiert wird. Je nach Kornhärte der eingesetzten Pigmente wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt bis zur gewünschten Teilchengrößenverteilung und kann bei Temperaturen im Bereich von 0 bis 100 °C erfolgen, zweckmäßig bei einer Temperatur zwischen 10 und 70 °C, vorzugsweise bei 20 bis 60 °C. Im Anschluss an die Feindispergierung kann die Pigmentpräparation mit Wasser, vorzugsweise entionisiertem oder destilliertem Wasser, weiter verdünnt werden.

Die erfindungsgemäßen Pigmentpräparationen eignen sich zum Pigmentieren und Färben von makromolekularen Materialien aller Art. Besonders eignen sich die erfindungsgemäßen Pigmentpräparation zur Pigmentierung bzw. Herstellung von Anstrich- und Dispersionsfarben, Dispersionslacken, Druckfarben, hierbei beispielsweise Textildruck-, Flexodruck-, Dekordruck- oder Tiefdruckfarben, Tapetenfarben, wasserverdünnbaren Lacken, Holzbeizen, Holzschutzsystemen und Lacken zur Oberflächenbeschichtung von Gegenständen aus beispielsweise Metall, Holz, Kunststoff, Glas, Keramik, Beton, Textilmaterial, Papier oder Kautschuk zur Anwendung kommen.

Bevorzugt werden Komponenten (B) und (C) und deren Mischungen, die die Haut oder Schleimhaut nicht reizen oder ätzend wirken. Eine Vielzahl von anionischen und nichtionischen Tensiden verursacht aber schwere Augenschäden. Die Europäischen Verordnung 2008-1272 EG über die Einstufung, Kennzeichnung, und Verpackung von Stoffen und Gemischen schreibt nach derzeitigem Stand innerhalb der Europäischen Gemeinschaft ab dem Jahr 2015 vor, dass Gemische, die > 1 % eines ätzenden oder > 3 % eines reizenden Tensides enthalten, als Gefahrstoff eingestuft werden. Vorteilhaft ist es daher, Tenside einzusetzen, die keine oder nur geringe haut- und schleimhautreizende Wirkung zeigen.

Beispiele für milde anionische Tenside sind Kokosfettsäuremethyltaurid-Natriumsalz, Ölsäuremethyltaurid - Natriumsalz und Isononansäureamidocarpronsäure - Triethanolammoniumsalz.

Ein Beispiel für nichtionische Tenside ohne Kennzeichnungspflicht sind Fettsäureethanolamidethoxylate.

Besonders bevorzugt sind die Kombinationen von
- Kokosfettsäuremethyltaurid - Natriumsalz (Komponente B) zusammen mit Fettsäureethanolamidethoxylaten (Komponente C),
- Natriumcocoylglycinat (Komponente B) zusammen mit Fettsäureethanolamidethoxylaten (Komponente C) und
- Fettsäureamidocarbonsäure als Triethanolammoniumsalz (Komponente B) zusammen mit Fettsäureethanolamidethoxylaten (Komponente C).

Eine besondere Eigenschaft der erfindungsgemäßen Pigmentpräparationen ist ihre Verwendung als universale Abtönpasten. Universale Abtönpasten eignen sich sowohl zum Einfärben von wässrigen Farben als auch zum Abtönen von lösemittelhaltigen Lacken. Übliche Dispergiermittel für wässrige Pigmentpräparationen stabilisieren die Pigmente nur in wässrigen, nicht aber in lösemittelhaltigen Systemen. Werden wässrige Pigmentpräparationen zum Einfärben von lösemittelhaltigen Lacken verwendet, kann es zur Agglomeration der Pigmente kommen und zum Aufschwimmen der agglomerierten Pigmente im Lack kommen. Beim Auftragen der Lacke mit Pinsel, Rollen oder durch Sprühapplikation kann es zu Streifigkeit und zu einem unruhigen Farbbild aufgrund von Farbtonunterschieden kommen, weil die Pigmente in der Farbe und während des Trocknungsprozesses flokkulieren, so dass die Farbstärke reduziert wird. Beim Auftrag der eingefärbten Lacke werden die Pigmentagglomerate wieder aufgetrennt, aber unterschiedlich stark, so dass es zu den beobachteten Farbtonunterschieden kommt. Im Labor wird dieses Phänomen im Rubout-Test simuliert, welcher in US-3840383 beschrieben wird.

### Beispiele

### Herstellung einer Pigmentpräparation

Das Pigment wird, entweder als Pulver, Granulat oder als Presskuchen, zusammen mit den Dispergiermitteln und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgt mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgt. Im Anschluss wird die Dispersion mit entionisiertem Wasser auf die gewünschte Pigmentendkonzentration eingestellt, die Mahlkörper abgetrennt und die Pigmentpräparation isoliert.

### Prüfung der Lackkompatibilität und der Farbstärke

Die erfindungsgemäßen Pigmentpräparationen zeigen beim Abtönen von wässrigen und lösemittelhaltigen Lacken und Farben weitgehend eine gute Verträglichkeit und keinen Rubout. Zur Bestimmung der Farbstärke und der Kompatibilität werden die Pigmentpräparationen einem mineralölhaltigen Langöl-Alkydlack zugesetzt. Für das Ausprüfen der Farbstärke und Kompatibilität werden 200 g abgetönter Langöl-Alkydlack bestehend aus 92 Gew.-% Grundlack und 8 Gew.-% der Pigmentpräparation in eine Blechdose geben und 60 Sekunden in einem Inkshaker 500 der Fa. Olbrich Know-how, Hemer homogenisiert. Der Langöl-Alkydlack wird nach einem Tag auf einem Prüfkarton mit einer 120 µm Rakel auf einem Filmziehgerät, Modell 509 MC der Fa. Erichsen GmbH, Hemer ausgestrichen. Nach 3 Minuten wird der Rubout-Test auf dem trocknenden Farbfilm in der in der Schrift US-3840383 beschriebenen Weise durchgeführt. Von dem vollständig getrockneten Film werden nach 24 Stunden die farbmetrischen Werte mit einem Konica - Minolta Spektrophotometer Modell CM 3600 bestimmt.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In vorliegender Anmeldung bedeuten "Teile" Gewichtsteile und Prozentangaben Gewichtsprozente, soweit im Einzelfall nichts anders angegeben ist.

### Beispiel 1

| | |
|---|---|
| 50,0 Teile | C.I. Pigment Black 11 (Bayferrox^{®} Black 316, Fa. Lanxess, Komponente (A)), |
| 2,9 Teile | 85 %iges Pulver eines Kokosfettsäureisethionats, Natriumsalz (Hostapon^{®} SCI-85 C, Fa. Clariant, Komponente (B)), |
| 8,0 Teile | Tallölfettsäureethanolamid umgesetzt mit 10 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 28,6 Teile | Wasser (Komponente (G)) |

In einem Mahlbehälter werden die Komponenten (B), (C), (D) und (E) vorgelegt und vermischt. Anschließend wird die pulverförmige Komponente (A) zugegeben und mit dem Dissolver vordispergiert. Die Feindispergierung erfolgt in einer Perlmühle mittels Zirkonmischoxidperlen der Größe d = 1 mm unter Kühlung. Anschließend werden die Mahlkörper abgetrennt und die Pigmentpräparation isoliert. Die Pigmentpräparation wird eine Woche bei 60 °C gelagert und visuell beurteilt. Die Viskosität der Pigmentpräparation wird mit einem Haake Viscometer 550 bei einer Scherrate von 1/60 sec⁻¹ gemessen.

Die Pigmentpräparation ist nach einwöchiger Lagerung bei 60 °C flüssig, homogen und schaumfrei. Die Viskosität der Pigmentpräparation beträgt 246 mPa·s. Der Rubout-Test zeigt keine Farbtonveränderung. Die Farbstärke des abgetönten Langöl-Alkydlackes wird als Standard zu 100 % festgelegt und als Vergleichswert für die folgenden Beispiele verwendet.

### Beispiel 2 (Vergleichsbeispiel)

| | |
|---|---|
| 50,0 Teile | C.I. Pigment Black 11 (Bayferrox^{®} Black 316, Fa. Lanxess, Komponente (A)), |
| 8,0 Teile | Tallölfettsäureethanolamid umgesetzt mit 5 Mol Ethylenoxid (Komponente (C)), |
| 5,0 Teile | 50 %ige wässrige Lösung eines Natrium-di-2-ethylhexylsulfosuccinates (Emulsogen^{®} SF 8, Fa. Clariant, Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 26,5 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach der Mahlung eine flüssige, viskose Pigmentdispersion. Die Pigmentpräparation ist nach einwöchiger Lagerung bei 60 °C viskos und leicht schaumig. Die Viskosität der Pigmentpräparation beträgt 1232 mPa·s. Der Rubout-Test zeigt eine Farbtonveränderung. Die Farbstärke des abgetönten Langöl-Alkydlackes beträgt 87 %.

### Beispiel 3 (Vergleichsbeispiel)

| | |
|---|---|
| 50,0 Teile | C.I. Pigment Black 11 (Bayferrox^{®} Black 316, Fa. Lanxess, Komponente (A)), |
| 8,0 Teile | Tallölfettsäureethanolamid umgesetzt mit 5 Mol Ethylenoxid (Komponente (C)), |
| 2,5 Teile | Ölsäure (Edenor^{®} Ti05, Fa. Oleon, Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 29,0 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach der Mahlung eine flüssige, leicht schäumende Pigmentdispersion. Die Pigmentpräparation ist nach einwöchiger Lagerung bei 60 °C viskos und leicht schaumig. Die Viskosität der Pigmentpräparation beträgt 1360 mPa·s. Der Rubout-Test zeigt eine leichte Farbtonveränderung. Die Farbstärke des abgetönten Langöl-Alkydlackes beträgt 97 %.

### Beispiel 4

| | |
|---|---|
| 50,0 Teile | C.I. Pigment Black 11 (Bayferrox^{®} Black 316, Fa. Lanxess, Komponente (A)), |
| 8,3 Teile | 30 %ige wässrige, pastöse Dispersion eines Kokosfettsäuremethyltaurids, Natriumsalz (Hostapon^{®} CT Paste, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 23,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 264 mPa·s. Der Rubout-Test zeigt keine Farbtonveränderung. Die Farbstärke des abgetönten Langöl-Alkydlackes beträgt 108 %.

### Beispiel 5

| | |
|---|---|
| 50,0 Teile | C.I. Pigment Black 11 (Bayferrox^{®} Black 316, Fa. Lanxess, Komponente (A)), |
| 8,3 Teile | 30 %ige wässrige Lösung eines Natiumcocoylglycinates (Hostapon^{®} SG, Fa. Clariant, Komponente (B)), |
| 8,0 Teile | Tallölfettsäureethanolamid umgesetzt mit 30 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 23,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 320 mPa·s. Der Rubout-Test zeigt keine Farbtonveränderung. Die Farbstärke des abgetönten Langöl-Alkydlackes beträgt 106 %.

### Beispiel 6

| | |
|---|---|
| 50,0 Teile | C.I. Pigment Black 11 (Bayferrox^{®} Black 316, Fa. Lanxess, Komponente (A)), |
| 2,9 Teile | ε-Isononanoylcapronsäure, Triethanolammoniumsalz (Hostacor^{®} IT, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 28,6 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 203 mPa·s. Der Rubout-Test zeigt keine Farbtonveränderung. Die Farbstärke des abgetönten Langöl-Alkydlackes beträgt 99 %.

### Beispiel 7

| | |
|---|---|
| 50,0 Teile | C.I. Pigment Black 11 (Bayferrox^{®} Black 316, Fa. Lanxess, Komponente (A)), |
| 8,3 Teile | 30 %ige wässrige Lösung eines Natriumlauroylsarkosids (Medialan^{®} LD, Fa. Clariant, Komponente (B)), |
| 8,0 Teile | Tallölfettsäureethanolamid umgesetzt mit 30 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 23,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 400 mPa·s. Der Rubout-Test zeigt keine Farbtonveränderung. Die Farbstärke des abgetönten Langöl-Alkydlackes beträgt 112 %.

### Beispiel 8

| | |
|---|---|
| 50,0 Teile | C.I. Pigment Black 11 (Bayferrox^{®} Black 316, Fa. Lanxess, Komponente (A)), |
| 8,3 Teile | 30 %ige wässrige Lösung eines Cocoamidopropylbetains (Genagen^{®} CAB 818, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 23,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 333 mPa·s. Der Rubout-Test zeigt keine Farbtonveränderung. Die Farbstärke des abgetönten Langöl-Alkydlackes beträgt 100 %.

### Beispiel 9

| | |
|---|---|
| 60,0 Teile | C.I. Pigment Red 101 (Bayferrox^{®} Red 130, Fa. Lanxess, Komponente (A)), |
| 8,3 Teile | 30 %ige wässrige Lösung eines Cocoamidopropylbetains (Genagen^{®} CAB 818, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 13,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 100 mPa·s. Der Rubout-Test zeigt keine Farbtonveränderung.

### Beispiel 10

| | |
|---|---|
| 60,0 Teile | C.I. Pigment Yellow 42 (Bayferrox^{®} Yellow 3920, Fa. Lanxess, Komponente (A)), |
| 8,3 Teile | 30 %ige wässrige Lösung eines Natriumcocoylglycinates (Hostapon^{®} SG, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 13,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 1206 mPa·s. Der Rubout-Test zeigt keine Farbtonveränderung.

### Beispiel 11

| | |
|---|---|
| 60,0 Teile | C.I. Pigment Green 17 (Chrome Oxide Green GN, Fa. Lanxess, Komponente (A)), |
| 8,3 Teile | 30 %ige wässrige Lösung eines Natriumcocoylglycinates (Hostapon^{®} SG, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 13,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 652 mPa·s. Der Rubout-Test zeigt keine Farbtonveränderung.

### Beispiel 12

| | |
|---|---|
| 60,0 Teile | C.I. Pigment Blue 28 (Heucodur^{®} Blue 551, Fa. Heubach, Komponente (A)), |
| 8,3 Teile | 30 %ige wässrige Lösung eines Natriumcocoylglycinates (Hostapon^{®} SG, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 13,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 500 mPa·s. Der Rubout-Test zeigt keine Farbtonveränderung.

### Beispiel 13

| | |
|---|---|
| 60,0 Teile | C.I. Pigment White 7 (Kronos^{®} Titanium Dioxide 2160, Fa. Kronos, Komponente (A)), |
| 8,3 Teile | 30 %ige wässrige Lösung eines Natriumcocoylglycinates (Hostapon^{®} SG, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 13,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 954 mPa·s. Der Rubout-Test zeigt keine

### Farbtonveränderung.

### Beispiel 14

| | |
|---|---|
| 50,0 Teile | C.I. Pigment Yellow 184 (Sicopal^{®} Yellow L 1100, Fa. BASF, Komponente (A)), |
| 8,3 Teile | 30 %ige wässrige Lösung eines Natriumcocoylglycinates (Hostapon^{®} SG, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 23,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 370 mPa·s. Der Rubout-Test zeigt keine Farbtonveränderung.

### Beispiel 15

| | |
|---|---|
| 60,0 Teile | C.I. Pigment Yellow 184 (Sicopal^{®} Yellow L 1100, Fa. BASF, Komponente (A)), |
| 8,3 Teile | 8,3 Teile 30 %ige wässrige Lösung eines Cocoamidopropylbetains (Genagen^{®} CAB 818, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 13,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 1580 mPa·s. Der Rubout-Test zeigt keine Farbtonveränderung.

### Beispiel 16

| | |
|---|---|
| 60,0 Teile | C.I. Pigment Black 11 (Bayferrox^{®} Black 316, Fa. Lanxess, Komponente (A)), |
| 8,3 Teile | 30 %ige wässrige, pastöse Dispersion eines Kokosfettsäuremethyltaurids, Natriumsalz (Hostapon^{®} CT Paste, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 13,2 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C flüssig, homogen und schaumfrei. Die Viskosität der Pigmentpräparation beträgt 966 mPa·s. Der Rubout-Test zeigt keine Farbtonveränderung.

### Beispiel 17 (Vergleichsbeispiel)

| | |
|---|---|
| 50,0 Teile | C.I. Pigment Red 101 (Bayferrox^{®} Red 130, Fa. Lanxess, Komponente (A)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 31,5 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach dem Mahlprozess eine hochviskose Paste. Nach einwöchiger Lagerung bei 60 °C trennt sich die Paste in 2 Phasen und bildet einen festen Bodensatz. Die Paste ist inhomogen und lässt sich nicht zum Abtönen einer Farbe verwenden.

### Beispiel 18 (Vergleichsbeispiel)

| | |
|---|---|
| 50,0 Teile | C.I. Pigment Yellow 184 (Sicopal^{®} Yellow L 1100, Fa. BASF, Komponente (A)), |
| 0,9 Teile | Cocosfettamin,(Genamin CC 100, Fa. Clariant, Komponente (B)), |
| 8,0 Teile | Tallölfettsäureethanolamid umgesetzt mit 15 Mol Ethylenoxid (Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 30,6 Teile | Wasser (Komponente (G)) |

Es wird bei der Herstellung und Ausprüfung der Pigmentpräparation wie unter Beispiel 1 ausgeführt vorgegangen. Die Pigmentpräparation ist nach einwöchiger Lagerung bei 60 °C getrennt. Es hat sich ein fester Bodensatz gebildet, der sich durch kräftiges Rühren dispergieren lässt.

### Beispiel 19 (Vergleichsbeispiel)

| | |
|---|---|
| 60,0 Teile | C.I. Pigment Black 11 (Bayferrox^{®} Black 316, Fa. Lanxess, Komponente (A)), |
| 8,0 Teile | Oleylethoxylates mit 10 Mol Ethylenoxid (Genapol O 100, Fa. Clariant, Komponente (C)), |
| 10,0 Teile | Glycerinethoxylat mit einem Molekulargewicht von 300 g/mol (Polyglykol G 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 21,5 Teile | Wasser (Komponente (G)) |

Es wird bei der Herstellung und Ausprüfung der Pigmentpräparation wie unter Beispiel 1 ausgeführt vorgegangen. Nach dem Mahlprozess ist die Pigmentpräparation eine hochviskose, für Dosierautomaten ungeeignete Paste, deren Viskosität außerhalb des Messbereiches des Viscometers liegt.

Die vorstehenden Vergleichsbeispiele zeigen die Bedeutung der erfindungsgemäßen Kombination aus den Komponenten B und C. Pigmentpräparationen mit geeigneter Viskosität lassen sich mit der erfindungsgemäßen Kombination aus den Komponenten B und C herstellen, aber nicht mit B allein.

| Beispiel | B | C | nach Lagerung | Viskosität [mPas] | Rubout-Farbveränderung | Farbstärke [%] |
|---|---|---|---|---|---|---|
| 1 | Kokosfettsäureisothionat, Na-Salz | TOFA-EA + 10 EO | flüssig, homogen, schaumig | 246 | nein | 100 |
| 2 (V) | - | TOFA-EA + 5 EO Natrium-2-EA-sulfosuccinat | viskos, schaumig | 1232 | ja | 87 |
| 3 (V) | - | TOFA-EA + 5 EO | viskos, schaumig | 1360 | ja | 97 |
| 4 | Kokosfettsäuremethylamid, Na Salz | TOFA-EA + 15 EO | flüssig, homogen, schaumig | 264 | nein | 108 |
| 5 | Na-Cocoylglycinat | TOFA-EA + 30 EO | flüssig, homogen, schaumig | 320 | nein | 106 |
| 6 | ε-Isononanoylcapronsäure-Triethanolammoniumsalz | TOFA-EA + 15 EO | flüssig, homogen, schaumig | 203 | nein | 99 |
| 7 | Natriumlauroylsanosol | TOFA-EA + 30 EO | flüssig, homogen, schaumig | 400 | nein | 112 |
| 8 | Cocoamidopropylbetain | TOFA-EA + 15 EO | flüssig, homogen, schaumig | 333 | nein | 100 |
| 9 | Cocoamidopropylbetain | TOFA-EA + 15 EO | flüssig, homogen, schaumig | 100 | nein | n. b. |
| 10 | Na-Cocoylglycinat | TOFA-EA + 15 EO | flüssig, homogen, schaumig | 1206 | nein | n. b. |

## Patentansprüche

1. Wässrige Pigmentpräparationen, enthaltend
(A) 1,0 bis 75,0 Gew.-% mindestens eines organischen oder anorganischen Weiß- oder Buntpigmentes oder eine Mischung verschiedener organischer und anorganischer Weiß- oder Buntpigmente,
(B) 0,01 bis 8,0 Gew.-% mindestens eines Fettsäurekondensationsprodukts der Formel (I), 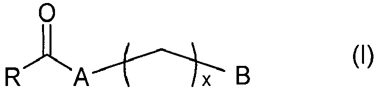 worin
R ein linearer oder verzweigter Alkyl- oder Alkenylrest mit 7 bis 21 Kohlenstoffatomen,
A ein Sauerstoffatom, eine -NH-Gruppe, eine -N(CH₃)-Gruppe oder eine Gruppe der Formel (II), 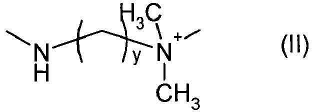
B eine Carbonsäuregruppe der Formel -COOH, eine Sulfonsäuregruppe der Formel -SO₃H, deren Natrium-, Kalium-, Ammonium- oder Monoalkanolammonium- oder Trialkanolammoniumsalze und deren deprotonierte Form -COO- und -SO₃⁻ und
x und y unabhängig voneinander eine ganze Zahl von 1 bis 8 darstellen,
(C) 0,01 bis 12,0 Gew.-% eines Fettsäureethanolamidethoxylats der Formel (XI), 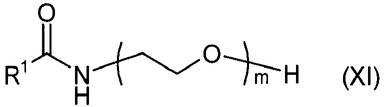 worin m für eine ganze Zahl von 3 bis 50, und R¹ für C₇- bis C₂₁-Alkyl oder -Alkenyl stehen und
(G) Wasser.

2. Wässrige Pigmentpräparation nach Anspruch 1, worin Komponente (B) ein Fettsäureisethioniat der Formel (III), 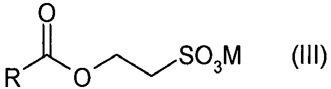 mit M = H, Natrium-, Kalium- oder Ammonium ist.

3. Wässrige Pigmentpräparation nach Anspruch 1, worin Komponente (B) ein Fettsäuretaurid oder ein Natrium-, Kalium- oder Ammoniumsalz davon ist.

4. Wässrige Pigmentpräparation nach Anspruch 1, worin Komponente (B) ein Fettsäuremethyltaurid der Formel (IV), 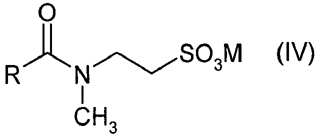 mit M = H, Natrium, Kalium oder Ammonium ist.

5. Wässrige Pigmentpräparation nach Anspruch 1, worin Komponente (B) ein Fettsäureglycinat der Formel (V), 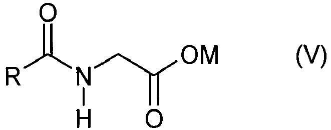 mit M = H, Natrium, Kalium oder Ammonium ist.

6. Wässrige Pigmentpräparation nach Anspruch 1, worin Komponente (B) eine Fettsäureamidocarbonsäure oder der deren Salz nach Formel (VI), 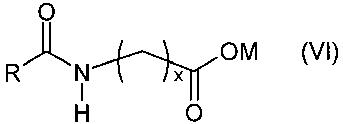 mit M = H, Natrium, Kalium, Ammonium, Monoalkanolammonium oder Trialkanolammonium ist.

7. Wässrige Pigmentpräparation nach Anspruch 1, worin Komponente (B) ein Sarkosin oder Sarkosid der Formel (VII) ist, und entweder in saurer Form als Sarkosine oder als neutralisierte Sarkoside mit M = Natrium, Kalium oder Ammonium vorliegt.

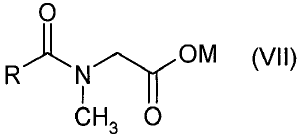

8. Wässrige Pigmentpräparation nach Anspruch 1, worin Komponente (B) ein Betain der Formel (VIII), 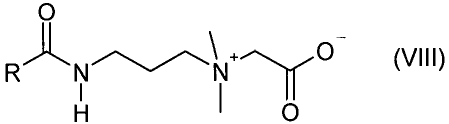 ist.

9. Wässrige Pigmentpräparation nach Anspruch 8, enthaltend 1 bis 12 Gew.-% eines Fettsäurealkanolamidethoxylats der Formel (XI).

10. Wässrige Pigmentpräparation nach einem oder mehreren der Ansprüche 1 bis 9 enthaltend 1 bis 8 Gew.-% eines Fettsäurekondensationsproduktes der Formel (I).

11. Wässrige Pigmentpräparation nach einem oder mehreren der Ansprüche 1 bis 10, enthaltend 10 bis 75 Gew.-% Wasser.

12. Wässrige Pigmentpräparation nach einem oder mehreren der Ansprüche 1 bis 11, worin R und R¹ unabhängig voneinander 11 bis 19 Kohlenstoffatome umfassen.

13. Wässrige Pigmentpräparation nach einem oder mehreren der Ansprüche 1 bis 12, welche eine Viskosität von 10 bis 10.000 mPas, bestimmt mit einem Kegel-Platte Viskosimeter bei einer Scherrate von 1/60 sec⁻¹, aufweist.

14. Wässrige Pigmentpräparationen nach einem oder mehreren der Ansprüche 1 bis 13, enthaltend
(D) 0 - 8,0 Gew.-% Tonmineralverdicker auf Basis von natürlichen oder alkalisch aktivierten Montmorrilonit-Schichtsilikatmineralien.

15. Wässrige Pigmentpräparationen nach einem oder mehreren der Ansprüche 1 bis 14, enthaltend
(E) 0 - 20,0 Gew.-% anorganische Füllstoffe.

16. Wässrige Pigmentpräparationen nach einem oder mehreren der Ansprüche 1 bis 15, enthaltend
(F) 0 bis 30 Gew.-% weitere, für die Herstellung von wässrigen Pigmentpräparationen übliche Hilfsmittel ausgewählt aus Netzmittel, Feuchthaltemittel, Lösemittel, Entschäumer, Rheologieadditive, Konservierungsmittel, Puffersubstanzen und pH-Regulatoren.

17. Wässrige Pigmentpräparation nach Anspruch 16, enthaltend bis zu 15 Gew.-% mindestens eines Feuchthalte- oder Lösemittels, ausgewählt aus Glykolethern mit 200 bis 20.000 g/mol zahlenmittlerem Molekulargewicht.

18. Wässrige Pigmentpräparation nach Anspruch 16 und/oder 17, enthaltend bis zu 2 Gew.-% Entschäumer.

19. Wässrige Pigmentpräparation nach einem oder mehreren der Ansprüche 16 bis 18, enthaltend bis zu 1 Gew.-% eines Topfkonservierungsmittels.

20. Verwendung einer wässrigen Pigmentpräparation nach einem oder mehreren der Ansprüche 1 bis 19 zum Einfärben von makromolekularen Materialien, Beschichtungsstoffen, Lacken und Farben, und ihre Verwendung zum Bedrucken von zweidimensionalen Flächengebilden.

## Claims

1. An aqueous pigment preparation comprising
(A) 1.0 to 75.0 wt% of at least one organic or inorganic white or chromatic pigment, or a mixture of different organic and inorganic white or chromatic pigments,
(B) 0.01 to 8.0 wt% of at least one fatty acid condensation product of the formula (I), 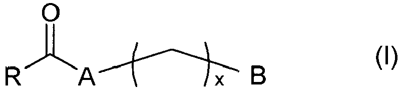 in which
R is a linear or branched alkyl or alkenyl radical having 7 to 21 carbon atoms,
A is an oxygen atom, a -NH group, a -N(CH₃) group, or a group of the formula (II), 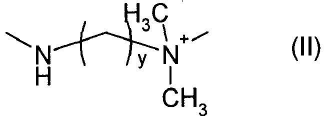
B is a carboxylic acid group of the formula -COOH, a sulfonic acid group of the formula -SO₃H, the sodium, potassium, ammonium or monoalkanolammonium or trialkanolammonium salts thereof, and the deprotonated form -COO⁻ and -SO₃⁻ thereof, and
x and y independently of one another are an integer from 1 to 8,
(C) 0.01 to 12.0 wt% of a fatty acid ethanolamide ethoxylate of the formula (XI), 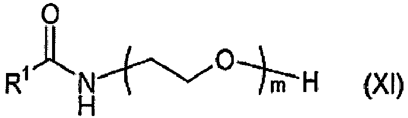 in which m is an integer from 3 to 50 and R¹ is C₇ to C₂₁ alkyl or alkenyl, and
(G) water.

2. The aqueous pigment preparation as claimed in claim 1, wherein component (B) is a fatty acid isethionate of the formula (III), 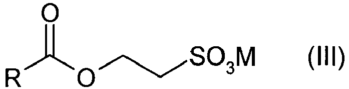 with M = H, sodium, potassium, or ammonium.

3. The aqueous pigment preparation as claimed in claim 1, wherein component (B) is a fatty acid tauride or a sodium, potassium, or ammonium salt thereof.

4. The aqueous pigment preparation as claimed in claim 1, wherein component (B) is a fatty acid methyltauride of the formula (IV), 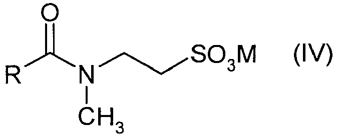 with M = H, sodium, potassium or ammonium.

5. The aqueous pigment preparation as claimed in claim 1, wherein component (B) is a fatty acid glycinate of the formula (V), 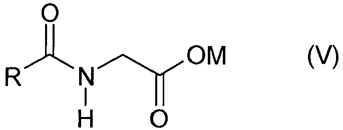 with M = H, sodium, potassium or ammonium.

6. The aqueous pigment preparation as claimed in claim 1, wherein component (B) is a fatty acid amidocarboxylic acid or the salt thereof according to formula (VI), 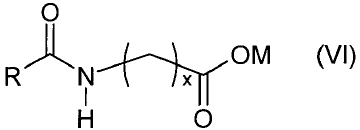 where M = H, sodium, potassium, ammonium, monoalkanolammonium, or trialkanolammonium.

7. The aqueous pigment preparation as claimed in claim 1, wherein component (B) is a sarcosine or sarcoside of the formula (VII), and is present either in acidic form as sarcosines or as neutralized sarcosides with M = sodium, potassium, or ammonium.

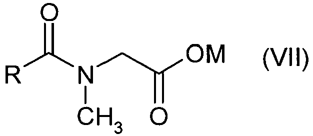

8. The aqueous pigment preparation as claimed in claim 1, wherein component (B) is a betaine of the formula (VIII),

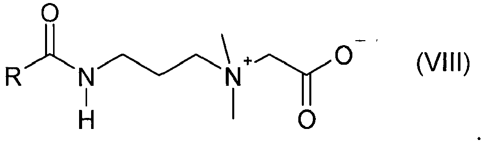

9. The aqueous pigment preparation as claimed in claim 8, comprising 1 to 12 wt% of a fatty acid alkanolamide ethoxylate of the formula (XI).

10. The aqueous pigment preparation as claimed in one or more of claims 1 to 9, comprising 1 to 8 wt% of a fatty acid condensation product of the formula (I).

11. The aqueous pigment preparation as claimed in one or more of claims 1 to 10, comprising 10 to 75 wt% of water.

12. The aqueous pigment preparation as claimed in one or more of claims 1 to 11, wherein R and R¹ independently of one another comprise 11 to 19 carbon atoms.

13. The aqueous pigment preparation as claimed in one or more of claims 1 to 12, which has a viscosity of 10 to 10 000 mPas, determined with a cone/plate viscometer at a shear rate of 1/60 sec⁻¹.

14. The aqueous pigment preparation as claimed in one or more of claims 1 to 13, comprising
(D) 0 - 8.0 wt% of clay mineral thickeners based on natural or alkali-activated montmorillonite phyllosilicate minerals.

15. The aqueous pigment preparation as claimed in one or more of claims 1 to 14, comprising
(E) 0 - 20.0 wt% of inorganic fillers.

16. The aqueous pigment preparation as claimed in one or more of claims 1 to 15, comprising
(F) 0 to 30 wt% of further auxiliaries customary for producing an aqueous pigment preparation and selected from wetting agents, humectants, solvents, defoamers, rheological additives, preservatives, buffer substances, and pH regulators.

17. The aqueous pigment preparation as claimed in claim 16, comprising up to 15 wt% of at least one humectant or solvent selected from glycol ethers having a 200 to 20 000 g/mol number-average molecular weight.

18. The aqueous pigment preparation as claimed in claim 16 and/or 17, comprising up to 2 wt% of defoamers.

19. The aqueous pigment preparation as claimed in one or more of claims 16 to 18, comprising up to 1 wt% of an in-can preservative.

20. The use of an aqueous pigment preparation as claimed in one or more of claims 1 to 19 for coloring macromolecular materials, coating materials, varnishes, and paints, and the use thereof for printing two-dimensional sheetlike structures.

## Revendications

1. Préparations pigmentaires aqueuses, contenant :
(A) 1,0 à 75,0 % en poids d'au moins un pigment blanc ou coloré organique ou inorganique ou un mélange de différents pigments blancs ou colorés organiques et inorganiques,
(B) 0,01 à 8,0 % en poids d'au moins un produit de condensation d'acide gras de formule (I) 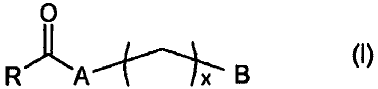 dans laquelle
R représente un radical alkyle ou alcényle linéaire ou ramifié de 7 à 21 atomes de carbone,
A représente un atome d'oxygène, un groupe -NH, un groupe -N(CH₃) ou un groupe de formule (II) 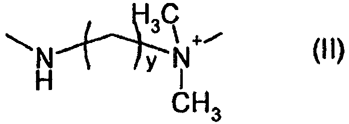
B représente un groupe acide carboxylique de formule -COOH, un groupe acide sulfonique de formule -SO₃H, leurs sels de sodium, de potassium, d'ammonium ou de monoalcanolammonium ou de trialcanolammonium et leur forme déprotonée -COO⁻ et -SO₃⁻, et
x et y représentent indépendamment l'un de l'autre un nombre entier de 1 à 8,
(C) 0,01 à 12,0 % en poids d'un éthoxylate d'amide d'acide gras et d'éthanol de formule (XI) 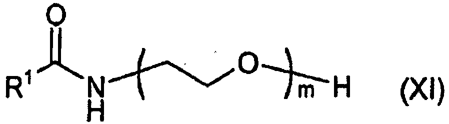 dans laquelle m représente un nombre entier de 3 à 50, et R¹ représente un alkyle ou alcényle en C₇ à C₂₁, et
(G) de l'eau.

2. Préparation pigmentaire aqueuse selon la revendication 1, dans laquelle le composant (B) est un iséthioniate d'acide gras de formule (III) 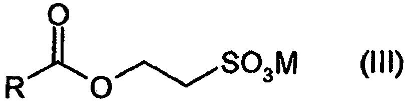 avec M = H, sodium, potassium ou ammonium.

3. Préparation pigmentaire aqueuse selon la revendication 1, dans laquelle le composant (B) est un tauride d'acide gras ou un sel de sodium, de potassium ou d'ammonium de celui-ci.

4. Préparation pigmentaire aqueuse selon la revendication 1, dans laquelle le composant (B) est un tauride méthylique d'acide gras de formule (IV) 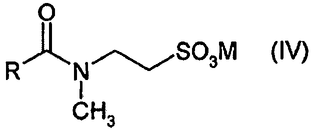 avec M = H, sodium, potassium ou ammonium.

5. Préparation pigmentaire aqueuse selon la revendication 1, dans laquelle le composant (B) est un glycinate d'acide gras de formule (V) 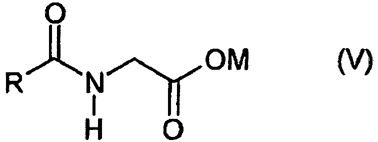 avec M = H, sodium, potassium ou ammonium.

6. Préparation pigmentaire aqueuse selon la revendication 1, dans laquelle le composant (B) est un acide gras-acide aminocarboxylique ou un sel de celui-ci selon la formule (VI) 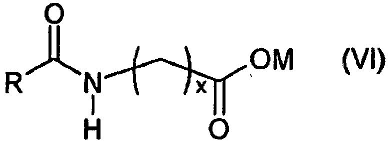 avec M = H, sodium, potassium, ammonium, monoalcanolammonium ou trialcanolammonium.

7. Préparation pigmentaire aqueuse selon la revendication 1, dans laquelle le composant (B) est une sarkosine ou un sarkoside de formule (VII), et se présente sous forme acide en tant que sarkosine ou sous la forme de sarkosides neutralisés avec M = sodium, potassium ou ammonium

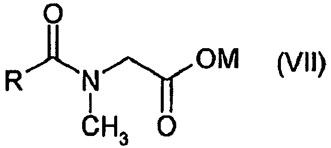

8. Préparation pigmentaire aqueuse selon la revendication 1, dans laquelle le composant (B) est une bétaïne de formule (VIII)

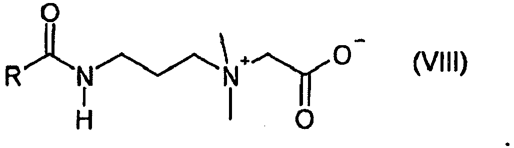

9. Préparation pigmentaire aqueuse selon la revendication 8, contenant 1 à 12 % en poids d'un éthoxylate d'amide d'acide gras et d'alcanol de formule (XI).

10. Préparation pigmentaire aqueuse selon une ou plusieurs des revendications 1 à 9, contenant 1 à 8 % en poids d'un produit de condensation d'acide gras de formule (I).

11. Préparation pigmentaire aqueuse selon une ou plusieurs des revendications 1 à 10, contenant 10 à 75 % en poids d'eau.

12. Préparation pigmentaire aqueuse selon une ou plusieurs des revendications 1 à 11, dans laquelle R et R¹ comprennent indépendamment l'un de l'autre 11 à 19 atomes de carbone.

13. Préparation pigmentaire aqueuse selon une ou plusieurs des revendications 1 à 12, qui présente une viscosité de 10 à 10 000 mPas, déterminée avec un viscosimètre à cône et plaque à un taux de cisaillement de 1/60 s⁻¹.

14. Préparations pigmentaires aqueuses selon une ou plusieurs des revendications 1 à 13, contenant :
(D) 0 à 8,0% en poids d'un épaississant minéral argileux à base de minéraux silicates stratifiés montmorillonite naturels ou activés alcaliniquement.

15. Préparations pigmentaires aqueuses selon une ou plusieurs des revendications 1 à 14, contenant : (E) 0 à 20,0 % en poids de charges inorganiques.

16. Préparations pigmentaires aqueuses selon une ou plusieurs des revendications 1 à 15, contenant :
(F) 0 à 30 % en poids d'autres adjuvants usuels pour la fabrication de préparations pigmentaires aqueuses, choisis parmi les agents mouillants, les agents de rétention de l'humidité, les solvants, les antimousses, les additifs de rhéologie, les conservateurs, les substances tampons et les régulateurs de pH.

17. Préparation pigmentaire aqueuse selon la revendication 16, contenant jusqu'à 15 % en poids d'au moins un agent de rétention de l'humidité ou d'un solvant, choisis parmi les éthers de glycol ayant un poids moléculaire moyen en nombre de 200 à 20 000 g/mol.

18. Préparation pigmentaire aqueuse selon la revendication 16 et/ou 17, contenant jusqu'à 2 % en poids d'antimousse.

19. Préparation pigmentaire aqueuse selon une ou plusieurs des revendications 16 à 18, contenant jusqu'à 1 % en poids d'un conservateur en pot.

20. Utilisation d'une préparation pigmentaire aqueuse selon une ou plusieurs des revendications 1 à 19 pour la coloration de matériaux macromoléculaires, de matériaux de revêtement, de vernis et de peintures, et utilisation pour l'impression de structures bidimensionnelles plates.
